# EUROPEAN PATENT SPECIFICATION

(11) **EP 2 238 268 B1**
(45) Date of publication and mention of the grant of the patent: **27.06.2012**
(21) Application number: 08871923.2
(22) Date of filing: 23.12.2008
(51) Int. Cl.: C21B 7/20

(54) **CHARGE DISTRIBUTION APPARATUS**
LADUNGSVERTEILUNGSVORRICHTUNG
APPAREIL DE DISTRIBUTION DE CHARGE

(30) Priority: 01.02.2008 LU 91413
(43) Date of publication of application: 13.10.2010
(73) Proprietor: PAUL WURTH S.A., 1122 Luxembourg (LU)
(72) Inventor: LONARDI, Emile, 4945 Bascharage (LU); THILLEN, Guy, 9234 Diekirch (LU); THINNES, Claude, 8284 Kehlen (LU)
(74) Representative: Office Freylinger
(86) International application number: PCT/EP2008/068245
(87) International publication number: WO 2009/095138

(56) References cited:
- WO-A-02/24962
- JP-A- 60 092 412
- KR-A- 20040 019 418
- US-A- 3 814 403

## Description

### Introduction

The present invention relates to a charge distribution apparatus for a furnace, in particular for a shaft furnace.

A charge distribution apparatus for a furnace, such as a shaft furnace, generally comprises a charge distribution chute mounted within the furnace and arranged for controlling the placement of raw material on the hearth of a shaft furnace. A drive mechanism is provided for rotating the charge distribution chute and for changing the angle of inclination of the charge distribution chute.

Such a drive mechanism is e.g. described in US 3,814,403, wherein a first motor is linked via a gear mechanism to a first drive shaft for rotating the charge distribution chute and a second motor is linked via a gear mechanism to a second drive shaft for changing the angle of inclination of the charge distribution chute. The first and second drive shafts each comprise a first end with a pinion interacting with the gear mechanism and a second end with a pinion interacting with the charge distribution chute. The gear mechanism between the motors and the drive shafts is a planetary gear mechanism. In the drive mechanism of US 3,814,403, the first and second drive shafts have a common axis of rotation, i.e. the two shafts are coaxial.

In order to avoid gas from the furnace escaping into the housing holding the drive mechanism, seals are arranged between the furnace wall and the drive shafts. Periodically, such seals have to be replaced. The seals are in particular worn due to the relative movement between the drive shafts and the furnace wall. The replacement of the seals can be very time consuming and dangerous.

In systems with two coaxial drive shafts, a first seal has to be arranged between one of the drive shafts and the furnace wall and a second seal has to be arranged between the two drive shafts. Accessibility to the seals is in such arrangements particularly difficult. In order to prolong the lifetime of the seals, strip seals have been introduced. Such strip seals, also referred to as stuffing boxes, have a long strip of sealing material tightly wrapped around the drive shaft. Periodically such a strip seal has to be tightened again. Although, such strip seals may prolong the lifetime of the seal, they are likely to damage the drive shaft because of the tightness required, thereby necessitating the replacement of the drive shaft at some point.

In systems with two coaxial drive shafts and in systems with two parallel drive shafts, the housing containing the planetary gear mechanism is generally lifted in order to grant access to the seals. This operation necessitates a prolonged stoppage of the furnace and considerable effort to access the seals.

### Object of the invention

Consequently, the object of the present invention is to provide a charge distribution apparatus wherein the seals between the drive shafts and the furnace are easily and quickly maintained and replaced. This aim is achieved by a charge distribution apparatus as claimed in claim 1.

### General description of the invention

In order to achieve this object, the present invention proposes a charge distribution apparatus for a furnace comprising a charge distribution chute and a drive mechanism with a first rotary drive shaft for rotating the charge distribution chute and a second rotary drive shaft for changing the angle of inclination of the charge distribution chute. The first and second drive shafts are coupled to respective first and second motors via a planetary gear mechanism for driving the first and second drive shafts. Each of the first and second rotary drive shafts have a first end with a first pinion interacting with the planetary gear mechanism and a second end with a second pinion interacting with the charge distribution chute, the second end of the rotary drive shaft extending through a furnace wall into the furnace, a primary sealing element being arranged between the furnace wall and the rotary drive shaft. The first rotary drive shaft has a first rotation axis and the second rotary drive shaft has a second rotation axis arranged parallel to and at a certain distance from the first rotation axis. A hollow socket is provided in the furnace wall for each of the rotary drive shafts, the socket comprising a first end outside the furnace and facing the drive mechanism and a second end inside the furnace and facing the second pinion, the rotary drive shaft extending through the socket. The second end of the socket comprises a second end-wall wherein the primary sealing element is arranged between the socket and the rotary drive shaft, so as to face the second pinion, the second pinion being removably connected to the rotary drive shaft.

The primary sealing elements of each rotary drive shaft are arranged on the furnace side of the furnace wall and are individually accessible from inside the furnace by detaching the second pinion of the respective drive shaft. The second pinion can e.g. be removably connected to the drive shaft by means of screws or bolts. During scheduled stoppages of the furnace, the primary sealing elements can be easily inspected and, if necessary, repaired or replaced. Maintenance and replacement of the primary sealing elements are hence considerably simplified. The primary sealing elements are easily accessible and there is no need to raise the complete planetary gear mechanism to access the primary sealing elements, nor is it necessary to dismantle a complex array of elements, as would be the case with coaxial drive shafts. Although the primary sealing elements might be replaced more often, this is largely compensated by the fact that no unscheduled stoppages are necessary to replace a sealing element. This construction is set forth in claim 1.

The socket, which is preferably generally cylindrical, can be used to house all the bearings, sealing elements and various other elements. If need be, the socket can be accessed to maintain or replace any of the elements located therein. Such a socket is preferably rigidly connected to the furnace wall, which it traverses such that there is no possible leakage between the furnace wall and the socket.

By arranging the primary sealing element arranged in the second end-wall at the second end of the socket, primary sealing element is arranged as close as possible to the interface between the furnace and the interior of the socket. The primary sealing element prevents any furnace gasses from entering the socket.

Because of easy access to the primary sealing element, the latter can be quickly replaced, thereby keeping the downtime of the furnace at a minimum.

According to one embodiment of the invention, the socket further comprises a first end-wall opposite the second end-wall and a secondary sealing element arranged in the first end-wall, the secondary sealing element being arranged between the socket and the rotary drive shaft, so as to face the second pinion. A chamber is formed in the socket between the primary sealing element and the secondary sealing element. This chamber can be filled with a lubricant for facilitating the rotation of the drive shaft in the socket. The secondary sealing element ensures that the lubricant stays within the socket, preventing it from leaking towards the planetary gear mechanism. Furthermore, should the primary sealing elements fail, the secondary sealing element may act as a second barrier preventing furnace gasses from escaping the furnace towards the planetary gear mechanism.

The first end-wall can e.g. be arranged at the first end of the socket or between the second end wall and the first end of the socket, the first end-wall resting on a shoulder between the first end and the second end of the socket.

Advantageously, the socket comprises bearings between the primary sealing element and the secondary sealing element for supporting and guiding the rotary drive shaft.

According to a particularly preferred embodiment of the invention, the apparatus further comprises an emergency sealing element associated with the primary sealing element, the emergency sealing element being arranged between the socket and the rotary drive shaft, so as to face the second pinion, the primary sealing element and the emergency sealing element being arranged at a certain distance from each other. The emergency sealing element constitutes a further barrier for the furnace gasses escaping from the furnace. Should the primary sealing element fail, the gasses can be stopped by the emergency sealing element. Indeed, the sealing element most likely to fail is the primary sealing element, because it is constantly exposed to the furnace gasses. The emergency sealing element on the other hand is normally protected from the furnace gasses by the primary sealing element. Only when the latter fails, is the emergency sealing element exposed to furnace gasses. The emergency sealing element hence constitutes a further barrier for the furnace gasses escaping from the furnace. Due to the emergency sealing element, it is not necessary to stop the furnace when the primary sealing element fails. Instead, it is possible to keep the furnace going until a scheduled stoppage, the emergency sealing element preventing the furnace gasses from entering the socket. The primary sealing element and, if necessary, the emergency sealing element can then be replaced during such scheduled stoppage. The downtime of the furnace can thereby be reduced and productivity increased.

Advantageously, the emergency sealing element is in a rest position during normal operating conditions and wherein the apparatus further comprises means for bringing the emergency sealing element into a working position if a leakage at the primary sealing element is detected. During normal operating conditions, i.e. when the primary sealing element is effectively sealing the interface between the furnace and the exterior of the furnace, the emergency sealing element is not needed. In order to prevent unnecessary wear of the emergency sealing element, the latter is maintained in a rest position, in which it is e.g. not in contact with the rotating drive shaft. The emergency sealing element can be brought into its working position, i.e. wherein it contacts the rotating drive shaft and seals the interface between the furnace and the exterior of the furnace, by means of e.g. a bypass valve. Such a bypass valve is configured so as to bring the emergency sealing element into its working position as soon as a leakage at the primary sealing element is detected by applying differential pressure to the emergency sealing element.

The apparatus preferably further comprises means for detecting leakages at the primary sealing element, such as e.g. noise emission detectors. By using such means for detecting leakages, the bypass valve can be instructed to place the emergency sealing element in its working position. Furthermore, the means for detecting leakages may be used to transmit an alarm to an operator interface indicating to the operator that the primary sealing element has failed. Based on this information, the operator can then prepare the replacement of the faulty primary sealing element during the next scheduled stoppage.

Preferably, the second end-wall is removably attached to the socket and, when the second end-wall is removed, the socket has an opening facing the furnace, the opening having a diameter at least slightly larger than an outer diameter of the bearings. Such a configuration allows the removal of the bearings from the furnace side. Easy access to the bearings is hence granted, for inspecting and, if necessary, replacing the bearings. Furthermore, with the bearings removed, access can be granted to the secondary sealing element for inspection and/or replacement.

The apparatus may further comprise a sleeve surrounding the rotary drive shaft in the vicinity of the second end-wall, the sleeve being solitary in rotation with the rotary drive shaft and being arranged between the primary sealing element and the rotary drive shaft. Such a sleeve may be formed from a material preventing excessive wear of the primary sealing element thereby prolonging its lifetime. The sleeve may also be arranged so as to, additionally, contact the emergency sealing element.

The primary sealing element and/or the emergency sealing element and/or the secondary sealing elements may each comprise a ring seal. Preferably however, each sealing element comprises a pair of ring seals.

### Brief description of the figures

The present invention will be more apparent from the following description of some not limiting embodiments with reference to the attached drawings. In these drawings, wherein identical reference numerals are used to indicate identical or similar elements,
- Fig.1:: is a schematic cut through a drive for charge distribution apparatus according to a first embodiment of the invention;
- Fig.2:: is an enlarged cut through a socket of a charge distribution apparatus according to a second embodiment of the invention;
- Fig.3:: is an enlarged cut through the socket of Fig.2, according to one embodiment; and
- Fig.4:: is an enlarged cut through the socket of Fig.2, according to another embodiment.

### Detailed description with respect to the figures

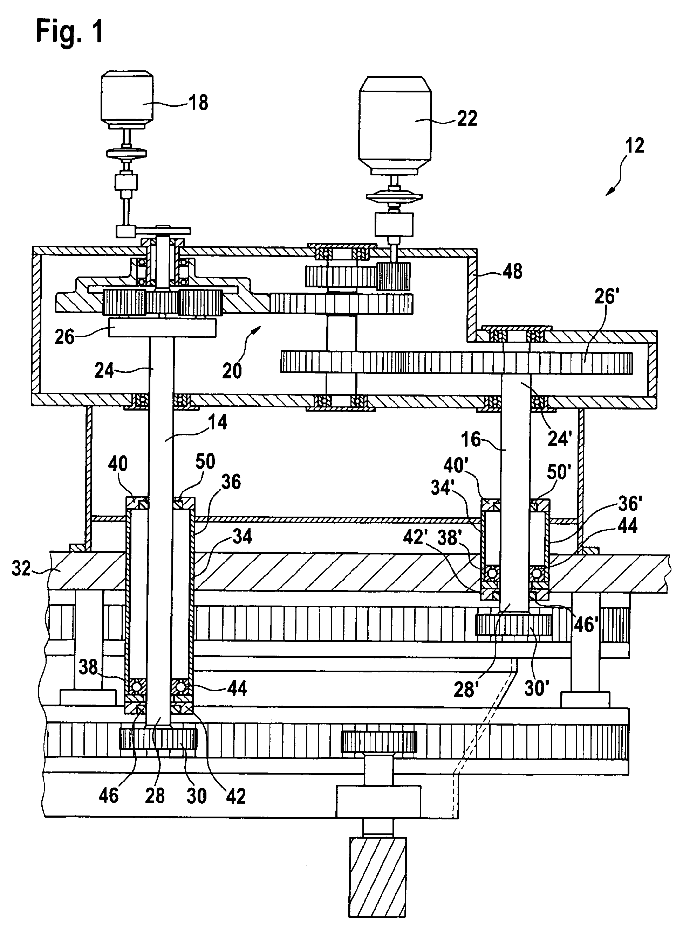

A charge distribution apparatus according to a first embodiment of the present invention is schematically represented in Fig.1. Such a charge distribution apparatus comprises a charge distribution chute (not represented) and a drive mechanism 12 for operating the charge distribution chute. The drive mechanism has a first rotary drive shaft 14 for rotating the charge distribution chute and a second rotary drive shaft 16 for changing the angle of inclination of the charge distribution chute. The first rotary drive shaft 14 is coupled to a first motor 18 via a planetary gear mechanism 20, which also couples the second rotary drive shaft 16 to a second motor 22. The first and second drive shafts 14, 16 are arranged parallel to and at a certain distance from each other.

Each of the first and second rotary drive shafts 14, 16 has a first end 24, 24' with a first pinion 26, 26' interacting with the planetary gear mechanism 20 and a second end 28, 28' with a second pinion 30, 30' interacting with the charge distribution chute. The rotary drive shaft 14, 16 extends through furnace wall 32 into the furnace via a hollow socket 34, 34', which may e.g. be generally cylindrical, as shown in Fig.1.

The hollow socket 34, 34' has a first end 36, 36' outside the furnace and facing the drive mechanism 12 and a second end 38, 38' inside the furnace and facing the second pinion 30, 30'. The hollow socket 34, 34' is closed off at the first end 36, 36' by a first end-wall 40, 40' and at the second end 38, 38' by a second end-wall 42, 42'. The hollow socket 34, 34' is further provided with bearings 44, 44' between the socket wall and the rotary drive shaft 14, 16 for guiding and supporting the latter.

In order to prevent furnace gas from entering the hollow socket 34, 34', the second end-wall 42, 42' is provided with a primary sealing element 46, 46', preferably in the form of a ring seal, arranged between the hollow socket 34, 34' and the respective rotary drive shaft 14, 16. The escape from the furnace of the furnace gas is to be avoided to, amongst others, prevent damage to the bearings 44, 44' in the hollow socket 34, 34' and to the planetary gear mechanism 20.

The second pinion 30, 30' is removably attached to the rotary drive shaft 14, 16 such that, when the second pinion 30, 30' is removed, access is granted to the second end-wall 42, 42' of the hollow socket 34, 34'. This then allows access to the primary sealing element 46, 46' from within the furnace, i.e. without the need to disassemble the drive mechanism by lifting the housing 48 containing the planetary gear mechanism 20.

A secondary sealing element 50, 50' is preferably associated with the first end wall 40, 40' for sealing off the hollow socket 34, 34' at the first end 36, 36' thereof, thereby preventing any lubricant fed into the hollow socket 34, 34' from escaping towards the planetary gear mechanism 20. The secondary sealing element 50, 50' may also act as a further obstacle to furnace gas escaping from the furnace towards the planetary gear mechanism 20, should the primary sealing element 46, 46' fail.

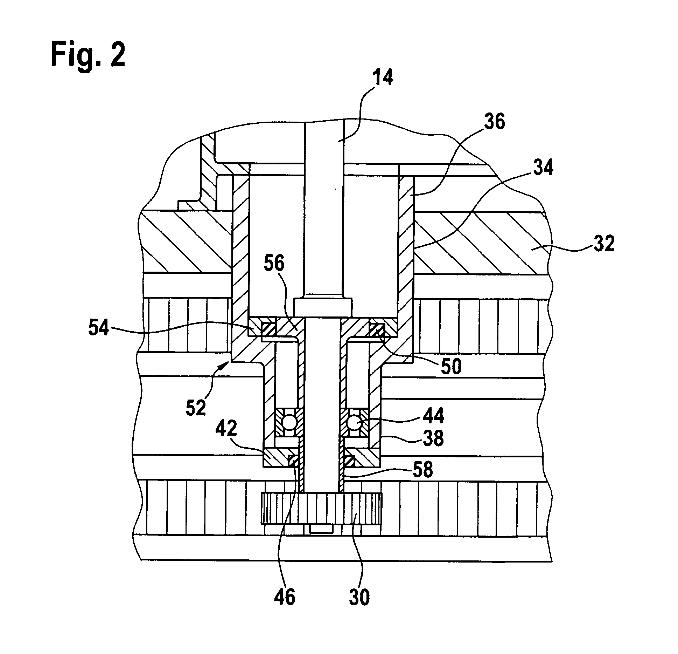

In Fig.2, an enlarged cut through a socket of a charge distribution apparatus according to a second embodiment of the invention can be seen. The hollow socket 34 of this embodiment is shown with its first end 36 open towards the planetary gear mechanism 20, i.e. not provided with a first end-wall at the first end 36. Instead, the hollow socket 34 is stepped and is provided with a shoulder 52 on which an end plate 54 rests. The end plate 54 is provided with a secondary sealing element 50, 50' for sealing off the hollow socket 34, 34' towards the planetary gear mechanism 20. The rotary drive shaft 14 is provided with a radially protruding element 56, which is arranged so as to contact the secondary sealing element 50, 50' in the end plate 54. Fig.2 also shows a sleeve 58 arranged around the rotary drive shaft 14 in the vicinity of the second end-wall 42. The sleeve 58 is solitary in rotation with the rotary drive shaft 14 and is arranged so as to contact the primary sealing element 46. The sleeve 58 may be formed from a material preventing excessive wear of the primary sealing element 46 thereby prolonging its lifetime.

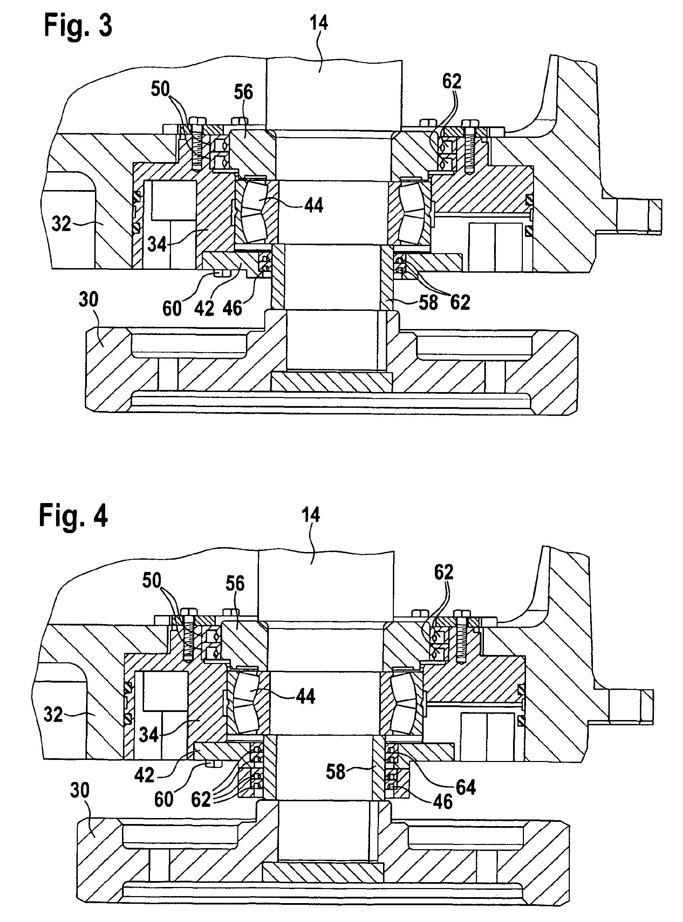

A more detailed view of a socket according to one embodiment is shown in Fig.3. The furnace wall 32 comprises a socket 34 for allowing a rotary drive shaft 14 to traverse the furnace wall 32. On the furnace side, the rotary drive shaft 14 is provided with a second pinion 30 for interacting with the charge distribution chute. When the second pinion 30 is removed from the rotary drive shaft 14, access is granted to the second end-wall 42, which can also be removed by undoing screw 60 connecting the second end-wall 42 to the socket 34. This exposes the primary sealing element 46, which is preferably formed by a pair of ring seals 62 as shown in Fig.3. The primary sealing element 46 can then be easily checked and/or replaced. With the second end-wall 42, the primary sealing element 46 and the sleeve 58 removed, access is also granted to the bearings 44, which may then also be serviced from inside the furnace.

The secondary sealing element 50 arranged between the socket 34 and the radially protruding element 56 of the rotary drive shaft 14 is also preferably formed by a pair of ring seals 62.

Fig.4 shows a further embodiment, similar to the one of Fig.3, wherein however, the primary sealing element 46, is complemented by an emergency sealing element 64, also preferably formed by a pair of ring seals 62. Such an emergency sealing element 64 is arranged downstream of the primary sealing element 46, as seen from the furnace side. In operation, the primary sealing element 46 is exposed to the furnace gas, whereas the emergency sealing element 64 is essentially protected from the furnace gas by the primary sealing element 46. It is only when the primary sealing element 46 fails, furnace gas is allowed to reach the emergency sealing element 64. Preferably, in order to prevent the emergency sealing element 64 from unnecessary wear, the emergency sealing element 64 is, in normal operation conditions not in contact with the rotary drive shaft 14 or its sleeve 58. However, when a leak is detected at the primary sealing element 46, the emergency sealing element 64 is brought into its working position against the rotary drive shaft 14 resp. the sleeve 58.

The emergency sealing element 64 then effectively prevents the furnace gas from further entering the socket 34. It is thereby possible to allow continued operation of the furnace until the next scheduled stoppage during which the failing primary sealing element 46 can then be replaced. There is therefore no need to stop the furnace solely for replacing the primary sealing element 46.

For example, the failing of the primary sealing element 46 can be detected by gas escaping through an open bypass valve. The bypass valve is then closed and the emergency sealing element 64 is put under pressure. The pressure pushes the inner lip of the emergency sealing element 64 towards the rotary drive shaft 14, 16 (or sleeve 58). Only then, will the emergency sealing element 64 get tight and wear. Before, the emergency sealing element 64 is put under pressure, its inner lip does in fact not touch the rotary drive shaft 14, 16 (or sleeve 58) and can therefore not be worn.

### Reference Numerals

- 12: drive mechanism
- 14: first rotary drive shaft
- 16: second rotary drive shaft
- 18: first motor
- 20: planetary gear mechanism
- 22: second motor
- 24, 24': first end of shaft
- 26, 26': first pinion
- 28, 28': second end of shaft
- 30, 30': second pinion
- 32: furnace wall
- 34, 34': hollow socket
- 36, 36': first end of socket
- 38, 38': second end of socket
- 40, 40': first end-wall
- 42, 42': second end-wall
- 44, 44': bearings
- 46, 46': primary sealing element
- 48: housing
- 50, 50': secondary sealing element
- 52: shoulder
- 54: end plate
- 56: radially protruding element
- 58: sleeve
- 60: screw
- 62: ring seals
- 64: emergency sealing element

## Claims

1. A charge distribution apparatus for a furnace, in particular for a shaft furnace, comprising
a charge distribution chute; and
a drive mechanism (12) with a first rotary drive shaft (14) for rotating said charge distribution chute and a second rotary drive shaft (16) for changing the angle of inclination of said charge distribution chute, said first and second drive shafts (14, 16) being coupled to respective first and second motors (18, 22) via a planetary gear mechanism (20) for driving said first and second drive shafts (14, 16),
each of said first and second rotary drive shafts (14, 16) having a first end (24, 24') with a first pinion (26, 26') interacting with said planetary gear mechanism (20) and a second end (28, 28') with a second pinion (30, 30') interacting with said charge distribution chute, said second end (28') of said second rotary drive shaft (16) extending through a furnace wall (32) into said furnace, a primary sealing element (46') being arranged between said furnace wall (32) and said second rotary drive shaft (16); wherein said first rotary drive (14) shaft has a first rotation axis and said second rotary drive shaft (16) has a second rotation axis;
said second rotation axis is arranged parallel to and at a certain distance from said first rotation axis;
**characterised in that**
said second end (28) of said first rotary drive shaft (14) extends through said furnace wall (32) into said furnace, a primary sealing element (46) being arranged between said furnace wall (32) and said first rotary drive shaft (14);
a hollow socket (34, 34') is provided in said furnace wall (32) for each of said rotary drive shafts (14, 16), said socket (34, 34') comprising a first end (36, 36') outside said furnace and facing said drive mechanism (12) and a second end (38, 38') inside said furnace and facing said second pinion (30, 30'), said rotary drive shaft (14, 16) extending through said socket (34, 34'), wherein said second end (38, 38') of said socket (34, 34') comprises a second end-wall (42, 42'), said primary sealing element (46, 46') being arranged in said second end-wall (42, 42'), between said socket (34, 34') and said rotary drive shaft (14, 16), so as to face said second pinion (30, 30'),
said second pinion (30, 30') is removably connected to said rotary drive shaft (14, 16).

2. Apparatus according to claim 1, wherein said socket is generally cylindrical.

3. Apparatus according to any of claims 1 or 2, wherein said socket further comprises:
a first end-wall opposite said second end-wall, and
a secondary sealing element arranged in said first end-wall, said secondary sealing element being arranged between said socket and said rotary drive shaft, so as to face said second pinion.

4. Apparatus according to claim 3, wherein said first end-wall is arranged at said first end of said socket.

5. Apparatus according to claim 4, wherein said first end-wall is arranged between said second end wall and said first end of said socket, said first end-wall resting on a shoulder between said first end and said second end of said socket.

6. Apparatus according to any of claims 3 to 5, wherein said socket comprises bearings between said rotary drive shaft and said socket, said bearings being arranged between said primary sealing element and said secondary sealing element.

7. Apparatus according to any of claims 1 to 6, further comprising an emergency sealing element associated with said primary sealing element, said emergency sealing element being arranged between said socket and said rotary drive shaft, so as to face said second pinion, said primary sealing element and said emergency sealing element being arranged at a certain distance from each other.

8. Apparatus according to claims 7, wherein said emergency sealing element is in a rest position during normal operating conditions and wherein said apparatus further comprises means for bringing said emergency sealing element into a working position if a leakage at said primary sealing element is detected.

9. Apparatus according to claim 7 or 8, further comprising means for detecting leakages at said primary sealing element.

10. Apparatus according to claim 9, wherein said means for detecting leakages comprises noise emission detectors.

11. Apparatus according to any of claims 6 to 10, wherein said second end-wall is removably attached to said socket and, when said second end-wall is removed, said socket has an opening facing said furnace, said opening having a diameter at least slightly larger than an outer diameter of said bearings.

12. Apparatus according to any of claims 1 to 11, further comprising a sleeve surrounding said rotary drive shaft in the vicinity of said second end-wall, said sleeve being solitary in rotation with said rotary drive shaft and being arranged between said primary sealing element and said rotary drive shaft.

13. Apparatus according to any of claims 1 to 12, wherein said primary sealing element and/or said emergency sealing element and/or said secondary sealing elements comprise a ring seal.

14. Apparatus according to any of claims 1 to 13, wherein said primary sealing element and/or said emergency sealing element and/or said secondary sealing elements comprise a pair of ring seals.

## Patentansprüche

1. Chargenverteilungsvorrichtung für einen Ofen, insbesondere für einen Schachtofen, umfassend
eine Chargenverteilerschurre; und
einen Antriebsmechanismus (12) mit einer ersten rotierenden Antriebswelle (14) zum Drehen der Chargenverteilerschurre und mit einer zweiten rotierenden Antriebswelle (16) zum Verändern des Neigungswinkels der Chargenverteilerschurre, wobei die erste und zweite Antriebswelle (14, 16) über ein Planetengetriebe (20) an einen jeweiligen ersten und zweiten Motor (18, 22) für den Antrieb der ersten und zweiten Antriebswelle (14, 16) gekoppelt sind,
wobei jede von der ersten und zweiten rotierenden Antriebswelle (14, 16) ein erstes Ende (24, 24') mit einem ersten Ritzel (26, 26'), das mit dem Planetengetriebe (20) zusammenwirkt, und ein zweites Ende (28, 28') mit einem zweiten Ritzel (30, 30'), das mit der Chargenverteilerschurre zusammenwirkt, aufweist, wobei das zweite Ende (28') der zweiten rotierenden Antriebswelle (16) sich durch eine Ofenwand (32) in den Ofen erstreckt, wobei ein Primärdichtelement (46') zwischen der Ofenwand (32) und der zweiten rotierenden Antriebswelle (16) angeordnet ist; wobei die erste rotierende Antriebswelle (14) eine erste Rotationsachse aufweist und die zweite rotierende Antriebswelle (16) ein zweite Rotationsachse aufweist;
wobei die zweite Rotationsachse parallel zu und in einem bestimmten Abstand von der ersten Rotationsachse angeordnet ist;
**dadurch gekennzeichnet, dass**
das zweite Ende (28) der ersten rotierenden Antriebswelle (14) sich durch die Ofenwand (32) in den Ofen erstreckt, wobei ein Primärdichtelement (46) zwischen der Ofenwand (32) und der ersten rotierenden Antriebswelle (14) angeordnet ist;
eine hohle Buchse (34, 34') in der Ofenwand (32) für jede der rotierenden Antriebswellen (14, 16) vorgesehen ist, wobei die Buchse (34, 34') ein erstes Ende (36, 36') außerhalb des Ofens und dem Antriebsmechanismus (12) zugewandt sowie ein zweites Ende (38, 38') innerhalb des Ofens und dem zweiten Ritzel (30, 30') zugewandt umfasst, wobei die rotierende Antriebswelle (14, 16) sich durch die Buchse (34, 34') erstreckt, wobei das zweite Ende (38, 38') der Buchse (34, 34') eine zweite Stirnwand (42, 42') umfasst, wobei das Primärdichtelement (46, 46') derart in der zweiten Stirnwand (42, 42') zwischen der Buchse (34, 34') und der rotierenden Antriebswelle (14, 16) angeordnet ist, dass es dem zweiten Ritzel (30, 30') zugewandt ist,
das zweite Ritzel (30, 30') abnehmbar mit der rotierenden Antriebswelle (14, 16) verbunden ist.

2. Vorrichtung nach Anspruch 1, wobei die Buchse generell zylindrisch ist.

3. Vorrichtung nach irgendeinem der Ansprüche 1 oder 2, wobei die Buchse ferner Folgendes umfasst:
eine erste Stirnwand gegenüber der zweiten Stirnwand und
ein in der ersten Stirnwand angeordnetes Sekundärdichtelement, wobei das Sekundärdichtelement derart zwischen der Buchse und der rotierenden Antriebswelle angeordnet ist, dass es dem zweiten Ritzel zugewandt ist.

4. Vorrichtung nach Anspruch 3, wobei die erste Stirnwand an dem ersten Ende der Buchse angeordnet ist.

5. Vorrichtung nach Anspruch 4, wobei die erste Stirnwand zwischen der zweiten Stirnwand und dem ersten Ende der Buchse angeordnet ist, wobei die erste Stirnwand auf einem Absatz zwischen dem ersten Ende und dem zweiten Ende der Buchse anliegt.

6. Vorrichtung nach irgendeinem der Ansprüche 3 bis 5, wobei die Buchse Lager zwischen der rotierenden Antriebswelle und der Buchse umfasst, wobei die Lager zwischen dem Primärdichtelement und dem Sekundärdichtelement angeordnet sind.

7. Vorrichtung nach irgendeinem der Ansprüche 1 bis 6, ferner umfassend ein dem Primärdichtelement zugeordnetes Notdichtelement, wobei das Notdichtelement derart zwischen der Buchse und der rotierenden Antriebswelle angeordnet ist, dass es dem zweiten Ritzel zugewandt ist, wobei das Primärdichtelement und das Notdichtelement in einem bestimmten Abstand voneinander angeordnet sind.

8. Vorrichtung nach Anspruch 7, wobei das Notdichtelement sich während der normalen Betriebsbedingungen in einer Ruhestellung befindet und wobei die Vorrichtung ferner ein Mittel zum Bringen des Notdichtelements in eine Arbeitsstellung umfasst, wenn eine Leckage an dem Primärdichtelement erfasst wird.

9. Vorrichtung nach Anspruch 7 oder 8, ferner umfassend ein Mittel zum Erfassen von Leckagen an dem Primärdichtelement.

10. Vorrichtung nach Anspruch 9, wobei das Mittel zum Erfassen von Leckagen Schallemissionsdetektoren umfasst.

11. Vorrichtung nach irgendeinem der Ansprüche 6 bis 10, wobei die zweite Stirnwand abnehmbar an der Buchse befestigt ist und, wenn die zweite Stirnwand entfernt ist, die Buchse eine dem Ofen zugewandte Öffnung aufweist, wobei die Öffnung einen Durchmesser aufweist, der zumindest etwas größer als ein Außendurchmesser der Lager ist.

12. Vorrichtung nach irgendeinem der Ansprüche 1 bis 11, ferner umfassend eine Hülse, die die rotierende Antriebswelle in der Nähe der zweiten Stirnwand umgibt, wobei die Hülse sich allein in Drehung mit der rotierenden Antriebswelle befindet und zwischen dem Primärdichtelement und der rotierenden Antriebswelle angeordnet ist.

13. Vorrichtung nach irgendeinem der Ansprüche 1 bis 12, wobei das Primärdichtelement und/oder das Notdichtelement und/oder die Sekundärdichtelemente eine Ringdichtung umfassen.

14. Vorrichtung nach irgendeinem der Ansprüche 1 bis 13, wobei das Primär dichtelement und/oder das Notdichtelement und/oder die Sekundärdichtelemente ein Paar von Ringdichtungen umfassen.

## Revendications

1. Appareil de distribution de charge pour un four, en particulier pour un four à cuve, comprenant
une glissière de distribution de charge ; et
un mécanisme d'entraînement (12) avec un premier arbre d'entraînement rotatif (14) pour mettre en rotation ladite glissière de distribution de charge et un deuxième arbre d'entraînement rotatif (16) pour changer l'angle d'inclinaison de ladite glissière de distribution de charge, lesdits premier et deuxième arbres d'entraînement (14, 16) étant couplés à des premier et deuxième moteurs respectifs (18, 22) par l'intermédiaire d'un mécanisme à engrenage planétaire (20) pour entraîner lesdits premier et deuxième arbres d'entraînement (14, 16),
chacun desdits premier et deuxième arbres d'entraînement rotatifs (14, 16) ayant une première extrémité (24, 24') avec un premier pignon (26, 26') interagissant avec ledit mécanisme à engrenage planétaire (20) et une deuxième extrémité (28, 28') avec un deuxième pignon (30, 30') interagissant avec ladite glissière de distribution de charge, ladite deuxième extrémité (28') dudit arbre d'entraînement rotatif (16) s'étendant à travers une paroi de four (32) jusque dans ledit four, un élément d'étanchéité primaire (46') étant agencé entre ladite paroi de four (32) et ledit deuxième arbre d'entraînement rotatif (16) ; dans lequel ledit premier arbre d'entraînement rotatif (14) a un premier axe de rotation et ledit deuxième arbre d'entraînement rotatif (16) a un deuxième axe de rotation ;
ledit deuxième axe de rotation est agencé en parallèle à et à une certaine distance dudit premier axe de rotation;
**caractérisé en ce que**
ladite deuxième extrémité (28) dudit premier arbre d'entraînement rotatif (14) s'étend à travers ladite paroi du four (32) jusque dans ledit four,
un élément d'étanchéité primaire (46) étant agencé entre ladite paroi du four (32) et ledit premier arbre d'entraînement rotatif (14) ;
un manchon creux (34, 34') est prévu dans ladite paroi du four (32) pour chacun desdits arbres d'entraînement rotatifs (14, 16), ledit manchon (34, 34') comprenant une première extrémité (36, 36') à l'extérieur dudit four et faisant face audit mécanisme d'entraînement (12) et une deuxième extrémité (38, 38') à l'intérieur dudit four et faisant face audit deuxième pignon (30, 30'), ledit arbre d'entraînement rotatif (14, 16) s'étendant à travers ledit manchon (34, 34'), dans lequel ladite deuxième extrémité (38, 38') dudit manchon (34, 34') comprend une deuxième paroi d'extrémité (42, 42'), ledit élément d'étanchéité primaire (46, 46') étant agencé dans ladite deuxième paroi d'extrémité (42, 42'), entre ledit manchon (34, 34') et ledit arbre d'entraînement rotatif (14, 16), de manière à faire face audit deuxième pignon (30, 30'),
ledit deuxième pignon (30, 30') est connecté de façon amovible audit arbre d'entraînement rotatif (14, 16).

2. Appareil selon la revendication 1, dans lequel ledit manchon est de manière générale cylindrique.

3. Appareil selon l'une quelconque des revendications 1 ou 2, dans lequel ledit manchon comprend en outre :
une première paroi d'extrémité opposée à ladite deuxième paroi d'extrémité, et
un élément d'étanchéité secondaire agencé dans ladite première paroi d'extrémité, ledit élément d'étanchéité secondaire étant agencé entre
ledit manchon et ledit arbre d'entraînement rotatif, de manière à faire face audit deuxième pignon.

4. Appareil selon la revendication 3, dans lequel ladite première paroi d'extrémité est agencée à ladite première extrémité dudit manchon.

5. Appareil selon la revendication 4, dans lequel ladite première paroi d'extrémité est agencée entre ladite deuxième paroi d'extrémité et ladite première extrémité dudit manchon, ladite première paroi d'extrémité reposant sur un épaulement entre ladite première extrémité et ladite deuxième extrémité dudit manchon.

6. Appareil selon l'une quelconque des revendications 3 à 5, dans lequel ledit manchon comprend des roulements entre ledit arbre d'entraînement rotatif et ledit manchon, lesdits roulements étant agencés entre ledit élément d'étanchéité primaire et ledit élément d'étanchéité secondaire.

7. Appareil selon l'une quelconque des revendications 1 à 6, comprenant en outre
un élément d'étanchéité d'urgence associé avec ledit élément d'étanchéité primaire, ledit élément d'étanchéité d'urgence étant agencé entre ledit manchon et ledit arbre d'entraînement rotatif, de manière à faire face au deuxième pignon, ledit élément d'étanchéité primaire et ledit élément d'étanchéité d'urgence étant agencés à une certaine distance l'un de l'autre.

8. Appareil selon la revendication 7, dans lequel ledit élément d'étanchéité d'urgence est en une position de repos dans des conditions de fonctionnement normal et dans lequel ledit appareil comprend en outre un moyen pour amener ledit élément d'étanchéité d'urgence en une position de travail si une fuite au niveau dudit élément d'étanchéité primaire est détectée.

9. Appareil selon la revendication 7 ou 8, comprenant en outre un moyen pour détecter des fuites au niveau dudit élément d'étanchéité primaire.

10. Appareil selon la revendication 9, dans lequel ledit moyen pour détecter des fuites comprend des détecteurs d'émission de bruits.

11. Appareil selon l'une quelconque des revendications 6 à 10, dans lequel ladite deuxième paroi d'extrémité est fixée de façon amovible audit manchon et, lorsque ladite deuxième paroi d'extrémité est enlevée, ledit manchon a une ouverture faisant face audit four, ladite ouverture ayant un diamètre au moins légèrement plus grand qu'un diamètre extérieur desdits roulements.

12. Appareil selon l'une quelconque des revendications 1 à 11, comprenant en outre une gaine entourant ledit arbre d'entraînement rotatif à proximité de ladite deuxième paroi d'extrémité, ladite gaine étant solidairement en rotation avec ledit arbre d'entraînement rotatif et étant agencée entre ledit élément d'étanchéité primaire et ledit arbre d'entraînement rotatif.

13. Appareil selon l'une quelconque des revendications 1 à 12, dans lequel ledit élément d'étanchéité primaire et/ou ledit élément d'étanchéité d'urgence et/ou ledit élément d'étanchéité secondaire comprennent un joint d'étanchéité annulaire.

14. Appareil selon l'une quelconque des revendications 1 à 13, dans lequel ledit élément d'étanchéité primaire et/ou ledit élément d'étanchéité d'urgence et/ou ledit élément d'étanchéité secondaire comprennent une paire de joints d'étanchéité annulaires.
